Europäisches Patentamt

European Patent Office

Office européen des brevets

(11) Publication number: **0 296 660**
**A2**

# EUROPEAN PATENT APPLICATION

(21) Application number: 88201187.7

(51) Int. Cl.⁴: **G01F 23/74**

(22) Date of filing: 09.06.88

(30) Priority: 18.06.87 IT 2094387

(43) Date of publication of application:
28.12.88 Bulletin 88/52

(84) Designated Contracting States:
AT BE CH DE ES FR GB GR IT LI NL SE

(71) Applicant: **CESARE BONETTI S.P.A.**
**Via Principessa Mafalda 116**
**Garbagnate Milanese Milan(IT)**

(72) Inventor: **Bonetti, Giulio**
**Via Emanuele Filiberto 7**
**Milano(IT)**

(74) Representative: **Raimondi, Alfredo, Dott. Ing.**
**Prof. et al**
**Studio Tecnico Consulenza Brevetti Piazzale**
**Cadorna 15**
**I-20123 Milano(IT)**

(54) **Magnetic level indicator unit with remote transmission.**

(57) The magnetic level indicator unit with remote transmission of the invention comprises at least one indicator unit at a level lower than the level of the recipient whose level is to be indicated, formed by a pair of descending conduits connected at the top to a condensation tank connected to an upper connection point of the recipient and directly to a lower connection point of the recipient respectively, the descending conduits communicating at the bottom with two end terminals of a tubular syphon member, of non-magnetic metal material, placed at the lower level and containing in its lower portion a liquid which is heavier than the liquid in the recipient and cannot be mixed therewith, forming an interface with this liquid in the two branches of the tubular syphon member, there being provided at the location of one of these interfaces, in one of the branches of the tubular syphon member, a magnetic float designed to orientate a plurality of external magnetic indicator cylinders, means for sensing the position of the float in the branch of the tubular syphon member also being provided and connected electrically to a remote indicator panel.

Fig. 1

## Magnetic level indicator unit with remote transmission

The present invention relates to a magnetic level indicator unit with remote transmission placed lower than the recipient whose level is to be indicated and on a control panel.

In order to indicate the level of the liquid contained in closed apparatus, such as tanks, boilers and the like, use is advantageously made of magnetic level indicators having a float which is axially movable in a tubular body communicating at its ends with the recipient whose level is to be indicated, which float supports a permanent magnet designed to orientate a plurality of magnetic indicator dipoles whose position shows the level in the recipient.

A level indicator of this type is disclosed in Italian Patent Application 24279 A/81 in the name of the applicants, to which reference should be made.

These level indicators have proved particularly suitable for many applications, in particular because they satisfy the need for a clear reading irrespective of the optical properties of the liquid to be measured, are not affected by any abnormalities in the electrical or pneumatic control devices normally used in plant engineering and have optimum properties of structural strength and reliability even in the presence of liquids in particularly harsh temperature and pressure operating conditions.

With these indicators, however, similarly to transparent column indicators, the value displayed must in all cases be read at the level of the recipient on which they are mounted which may be disadvantageous, particularly in the case of recipients located in high positions or whose access is difficult as is, for example, the case of cylindrical bodies of steam generator boilers and the like.

The fact that the level of the recipient can be monitored only by going into the vicinity thereof, without being able to have this information on an indicator panel in the control room, is a further drawback.

This raises the problem of providing an indication of the level in liquid recipients which is reliable and direct, but is transmitted remotely to a level lower than that of the recipient and is also, advantageously, available in the control room, while at the same time ensuring the reliability of the information supplied, which is particularly important in many applications as, for example, in the above-mentioned case of the pressurized cylindrical bodies of steam generator boilers.

These results are obtained by the present invention which provides a magnetic level indicator unit with remote transmission comprising at least one indicator unit at a level lower than that of the recipient whose level is to be indicated, formed by a pair of descending conduits, connected at the top to a condensation tank connected to an upper connection point of the recipient and directly to a lower connection point of the recipient respectively, the points being placed respectively above the maximum and below the minimum level of liquid in the recipient in operating conditions, the descending conduits communicating at the bottom with the two end terminals of a tubular syphon member, of non-magnetic metal material, placed at the lower level and containing in its lower portion a liquid which is heavier than the liquid contained in the recipient and cannot be mixed therewith, forming an interface with this liquid in the two branches of the tubular syphon member, wherein a magnetic float, designed to orientate a plurality of magnetic indicator cylinders, disposed externally to the branch of the tubular element and parallel thereto, is provided at the location of one of these interfaces in one of the branches of the tubular syphon element, means for sensing the position of the float in the branch of the tubular syphon element being provided and electrically connected to a remote indicator panel.

In more detail, the descending conduits are connected to the connection point of the recipient via upper and lower horizontal conduits, the condensation tank being interposed between the upper conduit and the descending conduit connected thereto, a vertical conduit providing a direct connection between the upper horizontal conduit and the lower horizontal conduit being provided separate from the upper conduit in a position located between the condensation tank and the recipient.

The condensation tank comprises walls having a temperature which causes the steam which flows into it from the recipient to which it is connected to condense, the level of liquid being maintained constant in the tank.

The upper horizontal conduit coming from the upper connection point of the recipient is inserted into the condensation tank at a level at which it constantly skims the liquid condensed in the tank, this level ensuring a constant head of liquid in one of the branches of the tubular syphon member.

The recipient whose level is to be indicated is advantageously provided with a further magnetic float level indicator provided with sensors for the position of the magnetic float connected electrically to an indicator panel adjacent to the indicator panel connected to the means for sensing the position of the float in the branch of the tubular syphon member and with an identical reading scale; a comparison of these indicator panels makes it possible to detect abnormalities in one of the level indicators.

The means for sensing the position of the magnetic floats are formed, in a preferred embodiment, by Reed bulbs.

If the recipient whose level is to be indicated operates at high temperature, the condensation tank is not insulated and has an outer surface area enabling an adequate exchange of heat for the condensation of the steam flowing into it from the recipient.

As an alternative, if the recipient whose level is to be indicated operates at a temperature which is not far removed from ambient temperature, the condensation tank is provided with means for cooling the steam flowing into it from the container for its condensation.

Further details are given in the following description, with reference to the attached drawings, in which:

Fig. 1 is an overall view of a level indicator unit of the invention;

Fig. 2 shows a detail, partly in section, of the float of the lowered indicator;

Fig. 3 shows an operating diagram of the indicator unit.

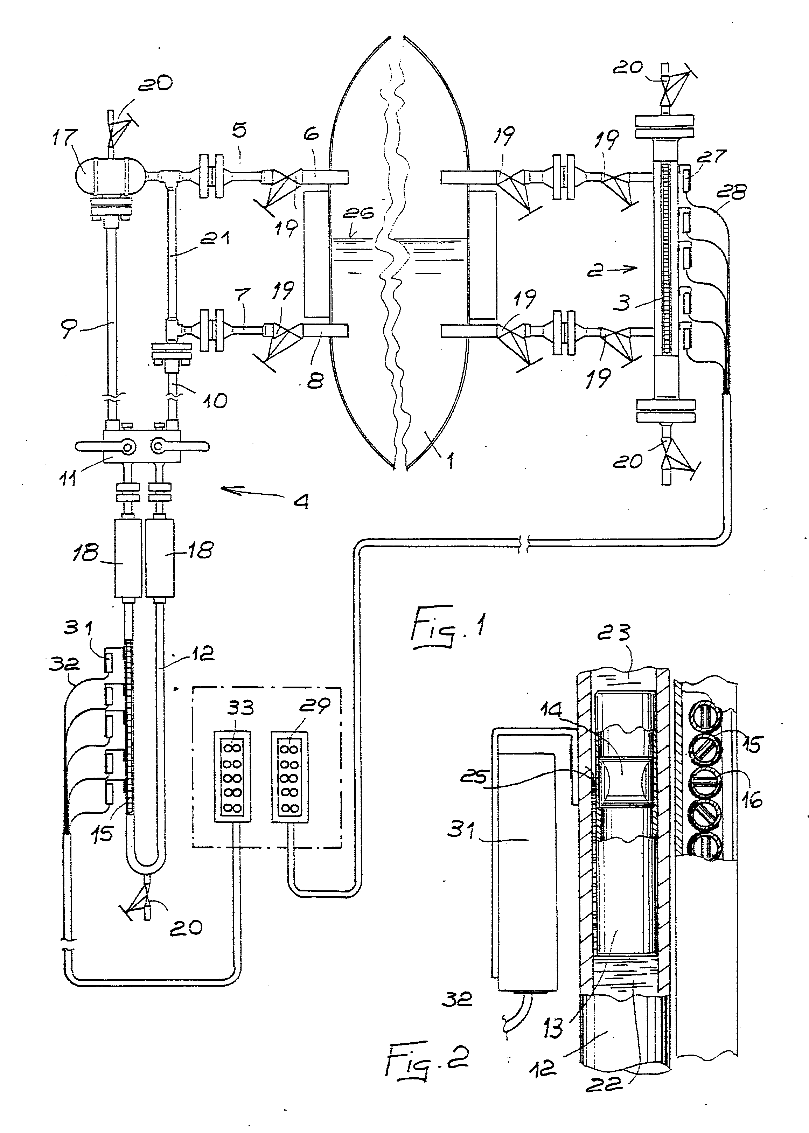

As shown in Fig. 1, a closed recipient 1 contains a liquid whose level is to be indicated placed high above the ground or at an operating and control level.

This recipient is provided with a magnetic float level indicator 2 connected directly thereto; this indicator enables the display of the level at recipient height by means of the plurality of rotary indicator cylinders 3 actuated by the float of the level indicator.

The structure of this level indicator is known, for example, from the Italian Patent Application 24279 A/81 in the name of the applicants.

In order to allow reading of the level in the recipient at a level lower than the recipient 1, a remote level indicator unit 4, designed to transmit the level information hydraulically to the working or monitoring level, is also connected.

This remote indicator unit is substantially formed by an upper conduit 5 connected to a take-up point 6 of the recipient 1 and by a lower conduit 7 connected to the take-up point 8 of the recipient; the upper and lower conduits communicate respectively with the descending conduits 9, 10 which are long enough to reach the desired level and which communicate in turn, via the interception, filling and draining valve unit 11, with the tubular syphon member 12 formed, for example, by a U-shaped tube.

The tubular syphon member 12 contains a float 13, shown in Fig. 2, provided with a permanent magnet 14 which orientates a plurality of indicator cylinders 15 disposed externally to the member 12 and supported to rotate about their horizontally disposed axis, which are provided with relative small magnets 16 transverse to their axis of rotation. Corresponding to the north-south orientation of the magnets 16 the cylinders 15 are provided with different colourings; this colouring allows detection of the arrangement of the cylinders and thus the level of the float whose magnet 14 causes the rotation of the cylinders thereby modifying their orientation.

At the top of the descending conduit 9 there is a condensation tank 17 into which the upper conduit 5 is inserted; members 18 for retaining impurities are also provided along the descending conduits 9, 10.

The unit 4 and the direct indicator 2 are also provided with relative interception valves 19 and bleed and drain valves 20.

The upper conduit 5 and the lower conduit 7 are also connected together by a vertical recirculation conduit 21.

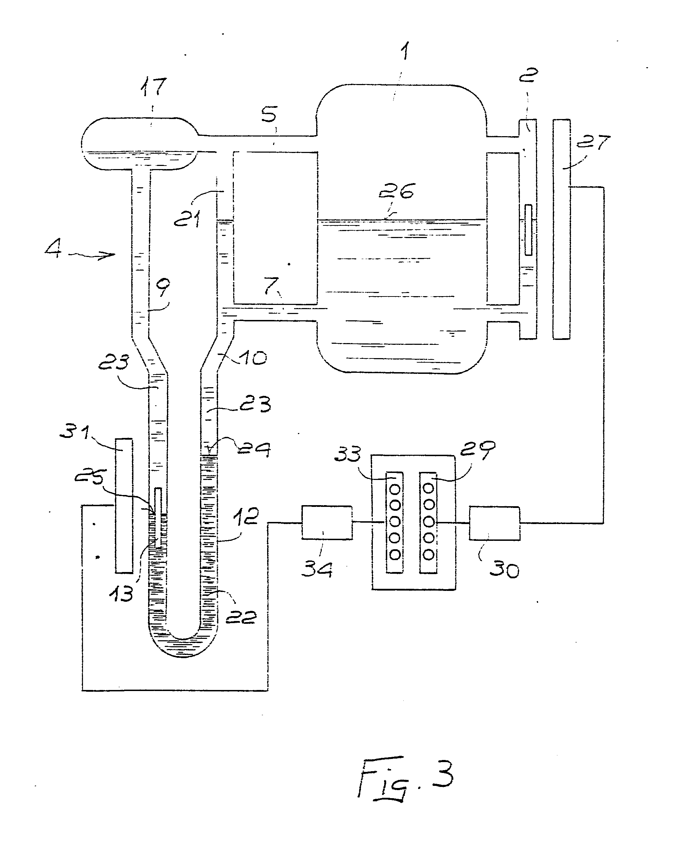

As shown in Fig. 3, the syphon member 12 contains a heavy liquid 22 which cannot be mixed with the liquid 23 contained in the recipient 1 and which flows into the syphon member via the descending conduit 10.

In the descending conduit 9, up to contact with the liquid 22, there is also liquid 23 condensed in the tank 17 and accumulated therein up to the level of insertion of the upper conduit 5 via which the condensed liquid overflows and returns to the recipient 1 via the recirculation conduit 21 in which, as a result of the law of communicating vessels, there is formed a level equal to that in the recipient 1.

The heavy liquid 22 has two free surfaces 24 and 25 acting as interfaces with the liquid 23 in the descending conduit 10 and in the descending conduit 9 respectively: the different levels of these surfaces are due to the difference between the two heads above them, provided, on one hand, by the level of the recipient 1 and, on the other hand, by the level at which the tank 17 overflows.

The constant nature of the head of liquid bearing on the interface 25, corresponding to the level at which the tank 17 overflows, is ensured by the constant presence in the tank of liquid condensed from the steam coming from the recipient 1; for this purpose, if the recipient 1 is at high temperature, as in the case in which it is formed by the cylindrical body of a steam generator boiler, it is sufficient for the insulation of the recipient 1 to be discontinued at the location of the tank 17 whose external surface ensures an adequate heat exchange for the condensation of the vapour flowing into it.

If the recipient 1 contains liquid which is not at a high enough temperature to ensure its condensation in the tank 17 solely as a result of the external temperature, the tank should be provided with an auxiliary cooling system.

The level of the interface 25 between the heavy liquid 22 and the liquid 23 therefore depends solely on the height of the level 26 in the recipient 1 and in the vertical conduit 21: the float 13 therefore, which has a weight and volume sufficient to cause it to sink in the liquid 23 and float in the heavy liquid 22 so that it is disposed close to the interface 25, shows by its position the level of the interface 25 and consequently the level 26 in the recipient 1 displaying this via the plurality of cylinders 15.

The heavy liquid 22 contained in the member 12 may be selected in accordance with requirements, provided that it cannot be mixed with the liquid 23 contained in the recipient 1 and is heavier than this liquid so that it can stratify onto the base of the member 12 and allow the float 13 to float readily at the interface with the liquid 23.

The density of the liquid 22 used influences the amplitude of the movement of the interface with variations in the position of the level 26 and the level reading scale must be set accordingly.

By way of example, in the case that the liquid contained in the recipient 1 is water, an appropriate heavy liquid is bromoform ($CHBr_3$) which has a specific weight of approximately 2.9 g/cm$^3$ such as to ensure that a float which is of a size sufficient to withstand the pressure under operating conditions (for example 200 bar) floats readily.

Since the float 13 operates at the interface between two liquids, these provide constant lubrication between the wall of the float and the inner wall of the member 12: its correct orientation as regards the plurality of cylinders 15 is thus ensured without the need for a rotary mounting of the magnet 14 which it contains.

The entire unit 4 is formed by components which can be made of metal material and suitably dimensioned to withstand the pressure and temperature operating conditions in the recipient 1, thus ensuring that the unit has optimum structural strength and at the same time providing a clear display of the position of the level in the recipient irrespective of the optical properties of the liquids used.

The remote level indication obtained in this way is transmitted hydraulically and is thus completely reliable as regards any drawbacks with commonly used electrical or pneumatic control apparatus or the like.

In order to provide a remote indication, for example in a control room, of the level in the recipient 1, there is provided along the body of the indicator 2 a plurality of magnetic sensors 27 designed to indicate the proximity of the magnetic element provided in the float of the indicator and formed, for example, by Reed bulbs, placed in a position such that they do not interfere magnetically with the plurality of indicator cylinders 3.

These sensors are thus connected with their respective cables 28 to an instrument panel 29, possibly with the interposition of an interface or calibration component 30 located in a suitable position, possibly at a considerable distance from the recipient 1, which is provided with display means formed, for example, as illustrated diagrammatically, by a plurality of light indicators of different colour which show the position of the level with an accuracy which depends on the number of sensors 27 used.

A plurality of magnetic sensors 31 which are connected, via the relative conductors 32, to a panel 33 adjacent to the panel 29, may also be associated with the float 13 contained in the syphon member 12, via an interface and calibration unit 34.

In this way it is possible, on reading the display, also to monitor the correct operation of the device since the indications displayed on the panel 33 and the panel 29 should be the same unless there are abnormalities in the operation of one of the indicators which are shown in this way.

The difference in information on the panel may also be detected by an automatic sensor member which compares the corresponding electrical signals from the indicators and is designed to generate an alarm signal or the like.

The sensors 27 or 31 may also be associated with auxiliary indicator members, for example showing maximum and minimum levels, recording members, or members for controlling apparatus of any type contained in the plant or any other electrically controlled device.

Many variants may be made without departing from the scope of the general characteristic features of the invention.

## Claims

1. Magnetic level indicator unit with remote transmission characterized in that it comprises at least one indicator unit at a level lower than that of the recipient whose level is to be indicated, formed by a pair of descending conduits, connected at the top to a condensation tank connected to an upper connection point of the recipient and directly to a lower connection point of the recipient respectively, the points being placed respectively above the maximum and below the minimum level of liquid in the recipient in operating conditions, the descending conduits communicating at the bottom with the two end terminals of a tubular syphon member, of non-magnetic metal material, placed at the lower level and containing in its lower portion a liquid which is heavier than the liquid contained in the recipient and cannot be mixed therewith, forming an interface with this liquid in the two branches of the tubular syphon member, wherein a magnetic float, designed to orientate a plurality of magnetic indicator cylinders disposed externally to the branch of the tubular member and parallel thereto, is provided in one of the branches of the tubular syphon element at the location of one of these interfaces, means for sensing the position of the float in the branch of the tubular syphon element connected electrically to a remote indicator panel also being provided.

2. Magnetic level indicator unit with remote transmission as claimed in claim 1, characterized in that the descending conduits are connected to the connection points of the recipient via upper and lower horizontal conduits, the condensation tank being interposed between the upper conduit and the descending conduit connected thereto, a vertical conduit providing a direct connection between the upper horizontal conduit and the lower horizontal conduit being provided separate from the upper conduit in a position located between the condensation tank and the recipient.

3. Magnetic level indicator unit with remote transmission as claimed in claim 1, characterized in that the condensation tank comprises walls having a temperature which causes the steam which flows into it from the recipient to which it is connected to condense, the liquid level being maintained constant in the tank.

4. Magnetic level indicator unit with remote transmission as claimed in claim 3, characterized in that the upper horizontal conduit coming from the upper connection point of the recipient is inserted into the condensation tank at a level at which it constantly skims the liquid condensed in the tank, this level ensuring a constant head of liquid in one of the branches of the tubular syphon element.

5. Magnetic level indicator unit with remote transmission as claimed in claim 1, characterized in that the means for sensing the position of the magnetic floats are formed by Reed bulbs.

6. Magnetic level indicator unit with remote transmission as claimed in claim 3, characterized in that if the recipient whose level is to be indicated operates at high temperature, the condensation tank has no insulation and has an outer surface area enabling an adequate exchange of heat for the condensation of the steam flowing into it from the recipient.

7. Magnetic level indicator unit with remote transmission as claimed in claim 3, characterized in that if the recipient whose level is to be indicated operates at a temperature which is fairly close to ambient temperature, the condensation tank is provided with means for cooling the steam flowing into it from the container and condensing it.

8. Magnetic level indicator unit with remote transmission as claimed in claim 1, characterized in that the recipient whose level is to be indicated is provided with a further magnetic float level indicator provided with sensors for the position of the magnetic float connected electrically to an indicator panel adjacent to the indicator panel connected to the means for sensing the position of the float in the branch of the tubular syphon member and with an identical reading scale, comparison of these indicator panels making it possible to detect abnormalities in one of the level indicators.

Fig. 1

Fig. 2

Fig. 3